# EUROPÄISCHE PATENTSCHRIFT

(11) **EP 0 632 259 B1**
(45) Veröffentlichungstag und Bekanntmachung des Hinweises auf die Patenterteilung: **28.04.1999**
(21) Anmeldenummer: 94110180.0
(22) Anmeldetag: 30.06.1994
(51) Int. Cl.: G01M 3/38

(54) **Vorrichtung zur Feststellung von Undichtigkeiten an Bauteilen**
Leak detection device
Dispositif de détection de fuite

(30) Priorität: 30.06.1993 DE 4321644
(43) Veröffentlichungstag der Anmeldung: 04.01.1995
(73) Patentinhaber: STN ATLAS Elektronik GmbH, 28305 Bremen (DE)
(72) Erfinder: Hornfeld, Willi, D-27793 Wildeshausen (DE); Grobecker, Helmut, D-28816 Stuhr (DE); Meyer, Dietmar, S-28213 Bremen (DE)
(74) Vertreter: Eisenführ, Speiser & Partner

(56) Entgegenhaltungen:
- EP-A- 0 536 586
- DE-A- 4 111 686
- US-A- 3 085 423
- US-A- 5 001 346

## Beschreibung

Die Erfindung betrifft eine Vorrichtung zur Feststellung von Undichtigkeiten an Bauteilen.

Die Feststellung von Undichtigkeiten an Bauteilen ist sowohl bei der Qualitätsprüfung in der Fertigung als auch im Betrieb unbedingt notwendig. Besonders kritisch ist die Feststellung von Undichtigkeiten bei Bauteilen, die in einer Umgebung mit Unter- oder Überdruck eingesetzt werden.

Heute gebräuchliche, insbesondere in der Fertigung verwendete Verfahren und Vorrichtungen zur Leckortung sind entweder teuer, schlecht handhabbar, zu ungenau oder benutzen toxische Medien zur Detektion von Undichtigkeiten, was jedoch im Hinblick auf eine Gefährdung von Bedienpersonal und Umwelt problematisch ist.

Eine Vorrichtung zum Feststellen von Undichtigkeiten an Bauteilen ist beispielsweise in US-A-5 001 346 beschrieben. Bei dieser Vorrichtung wird SF₆ unter Druck in das zu prüfende Bauteil geleitet. Mögliche Leckstellen werden mit Infrarot einer Wellenlänge beleuchtet, die von SF₆ absorbiert werden. Die Stellen werden gleichzeitig mit einer IR-Kamera beobachtet, so dass austretendes SF₆ und somit Leckstellen sichtbar werden.

Es ist daher Aufgabe der vorliegenden Erfindung, eine Vorrichtung zur Feststellung von Undichtigkeiten an Bauteilen zu schaffen, die verhältnismäßig preiswert ist, sich einfach, umweltschonend und ohne Gefahren für das Bedienpersonal handhaben läßt sowie berührungslos und präzise arbeitet.

Diese Aufgabe wird mit einer Vorrichtung gelöst, die erfindungsgemäB eine Einrichtung zum Durchleiten von CO₂ durch das zu untersuchende Bauteil, eine Kamera mit einer im wesentlichen auf die Spektraleigenschaften des Gases abgestimmten, schmalbandigen Filtercharakteristik und eine an die Kamera angeschlossene Einrichtung zur Verarbeitung und Anzeige des aufgenommenen Bildes vom zu untersuchenden Bauteil aufweist.

Die erfindungsgemäße Vorrichtung, die sich insbesondere zur Untersuchung von hohlen Bauteilen eignet, bietet eine eindeutige Detektion und Lokalisierung von Undichtigkeitsstellen aufgrund der optischen Erfassung und der nachgeschalteten opto-elektronischen Bildverarbeitung. Somit arbeitet die erfindungsgemäße Vorrichtung besonders präzise. Außerdem ist die erfindungsgemäße Vorrichtung leicht handhabbar, da sie berührungslos arbeitet und an jede Veränderung der Prüfumgebung leicht anpaßbar ist. Schließlich arbeitet die erfindungsgemäße Vorrichtung umweltfreundlich, und es besteht auch keine Gefahr für das Bedienpersonal, da mit CO₂ ein unbedenkliches Gas verwendet werden kann. Die genannten Vorteile werden erfindungsgemäß erzielt durch die Sichtbarmachung von Absorptionsvorgängen von an einer Undichtigkeitsstelle des Prüflings austretendem CO₂ mit Hilfe einer Kamera, die ein im wesentlichen auf die Spektraleigenschaften vom CO₂ abgestimmtes, schmalbandiges Filter oder entsprechende Filtereigenschaften aufweist. Da demnach erfindungsgemäß die Empfindlichkeit der Kamera genau auf die Absorptionsbande des nachzuweisenden Prüfgases begrenzt ist, ist ein hoher Strahlungskontrast zwischen dem austretenden CO₂ und seiner Umgebung bzw. dem Hintergrund erzielbar.

Die optische Erfassung des aus Undichtigkeitsstellen austretenden CO₂ kann noch durch eine Beleuchtungseinrichtung zur Beleuchtung des zu untersuchenden Bauteils mit Licht verstärkt werden, wobei die Wellenlänge des Lichtes im wesentlichen auf die Spektraleigenschaften vom CO₂ abgestimmt ist.

Die Vorrichtung arbeitet im Infrarot-Bereich.

Zur quantitativen Beurteilung der Undichtigkeitsstelle weist die Gasdurchleitungseinrichtung ein Durchflußmeßgerät auf.

Zweckmäßigerweise leitet die Gasdurchleitungseinrichtung das CO₂ unter Druck durch das zu untersuchende Bauteil.

Für eine möglichst vollständige Erfassung aus allen Perspektiven sind vorzugsweise das zu untersuchende Bauteil und die Kamera zueinander bewegbar.

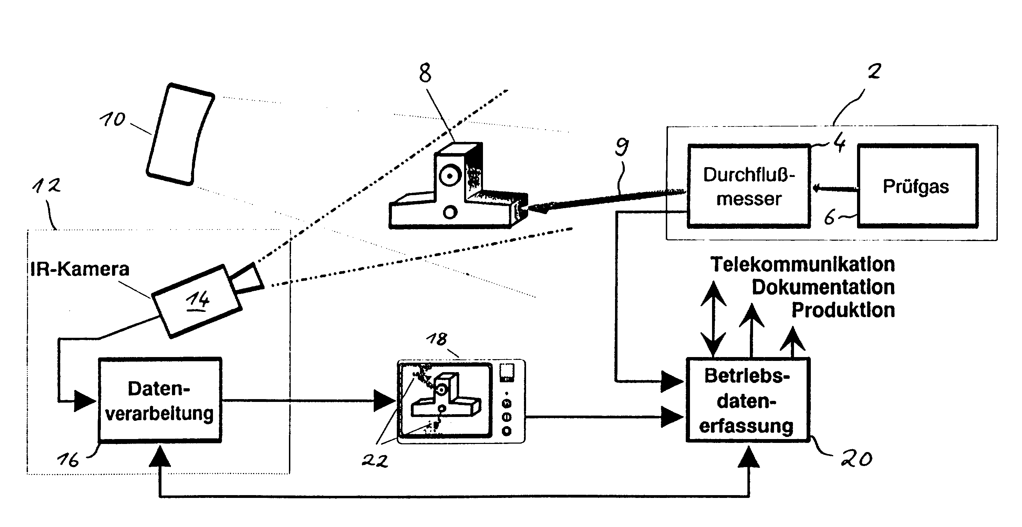

Nachfolgend wird ein bevorzugtes Ausführungsbeispiel der Erfindung anhand der beiliegenden Zeichnung näher erläutert, in der ein schematisches Blockschaltbild einer bevorzugten Ausführung der Vorrichtung zur Feststellung von Undichtigkeiten dargestellt ist.

Wie der beiliegenden Zeichnung zu entnehmen ist, ist eine Gasdurchleitungseinrichtung 2 vorgesehen, die u.a. einen Durchflußmesser 4 sowie einen Speicher 6 mit Prüfgas aufweist. Als Prüfgas wird CO_{2,} verwendet. Die Gasdurchleitungseinrichtung 2 weist ferner einen Schlauch, ein Rohr oder ein sonstiges Verbindungsmittel auf, wodurch das Prüfgas in den Prüfling 8 geleitet wird, was in der beiliegenden Zeichnung durch den Pfeil 9 angedeutet ist.

Ferner ist eine Beleuchtungseinrichtung 10 vorgesehen, die beispielsweise einen Quarzstrahler aufweist. Mit Hilfe der Beleuchtungseinrichtung 10 wird der Prüfling 8 während des Prüfvorganges bestrahlt.

Eine Aufnahmeeinrichtung 12 weist eine Infrarotkamera 14 auf. Sie ist mit einem am CO₂ angepaBten Schmalband-Filter versehen, durch das die im allgemeinen breitbandige Spektralempfindlichkeit der Kamera 14 genau auf die Absorptionsbande bei einer Zentralwellenlänge von 4,26 µm adaptiert ist. Das gleiche gilt auch für die Beleuchtungseinrichtung, die vorzugsweise Infrarot-Licht mit einer Schwerpunktwellenlänge von ca. 4 µm erzeugen soll.

An dieser Stelle sei darauf hingewiesen, daß statt eines Filters alternativ auch die Infrarot-Optik der Kamera 14 so ausgebildet werden kann, daß sie selbst die geforderten Filtereigenschaften besitzt.

Die optische Erfassungseinrichtung 12 weist außerdem eine integrierte oder abgesetzte Bildverarbeitungseinrichtung 16 zur Erzeugung optimaler Bildqualität in schwarz/weiß oder Farbe sowie zur automatischen Detektion des an einer Undichtigkeitsstelle austretenden Prüfgases und Ermittlung des Ursprungs der Leckage durch Soll/Istvergleich oder situationsangepaßte Bildauswertung auf.

An die Bilderfassungseinrichtung 12 ist ein Monitor 18 zur Darstellung des Prüflings und des Prüfergebnisses mit ggf. aus dem Prüfling austretender Gasfahne angeschlossen.

Ferner ist noch eine Datenerfassungseinrichtung 20 vorgesehen, die an die Datenverarbeitungseinrichtung 16 und den Durchflußmesser 4 angeschlossen ist und Schnittstellen für Telekommunikation und Datenbanken aufweist.

Nachfolgend wird der Ablauf des Prüfvorganges mit Hilfe der dargestellten Vorrichtung beschrieben.

Über entsprechende Schläuche, Rohre oder sonstige Verbindungsmittel wird das im Speicher 6 der Gasdurchleitungseinrichtung 2 abgefüllte CO₂ in den Prüfling 8 geleitet. Dies erfolgt in der Regel unter Druck, wobei der Prüfdruck den Prüflingsspezifikationen angepaßt wird.

Zur opto-elektronischen Aufnahme des Prüflings 8 und eventueller Undichtigkeitsstellen wird die Infrarotkamera 14 entweder manuell oder automatisch um den Prüfling 8 herumgeführt oder der Prüfling 8 selbst vor der Kamera bewegt. Die Beleuchtungseinrichtung 10 ist dabei entweder auf der Kamera 14 angebracht oder in dessen Nähe angeordnet, um den Prüfling 8 in dem von der Kamera 14 aufzunehmenden Bildausschnitt mit Infrarot-Licht zu beleuchten.

Die im allgemeinen breitbandige Spektralempfindlichkeit der Infrarotkamera 14 ist in der zuvor erwähnten Weise genau auf die Absorptionsbande des nachzuweisenden CO₂ begrenzt, so daß ein möglichst hoher Strahlungskontrast zwischen der austretenden Gasfahne 22 und seiner Umgebung bzw. dem Hintergrund gewährleistet ist. Unterstützt wird der Strahlungskontrast durch die externe Beleuchtung mit Hilfe der Beleuchtungseinrichtung 10, welche zusätzlich zur thermischen Eigenstrahlung des betrachteten Prüflings die Strahlungsintensitäten über die durch das Filter angehobene Nachweisempfindlichkeitsschwelle der Kamera 14 hebt. Aufgrund von Absorptions- und Emissionserscheinungen im Prüfgas 22 wird dieses im von der Kamera 14 aufgenommenen Infrarotbild sichtbar.

Alle von der Kamera 14 aufgenommenen Bilder oder wahlweise nur die Bilder mit den Undichtigkeitsstellen, die durch ausströmendes Prüfgas 22 im Infrarotbild sichtbar gemacht sind, werden von der Datenverarbeitungseinrichtung 16 verarbeitet, gespeichert und ggf. ausgewertet und können auf dem Monitor 18 dargestellt werden. Die Bilddarstellung auf dem Monitor kann in schwarz/weiß oder in Farbe, vorzugsweise in "Falschfarbe", erfolgen, wobei die an der Undichtigkeitsstelle austretende Prüfgasfahne markiert werden kann.

Die Daten der aufgenommenen Bilder werden in der Datenerfassungseinrichtung 20 weiterverarbeitet und weitergeleitet, wobei beispielsweise detektierte Undichtigkeitsstellen in besonderer Weise markiert werden können.

Zur quantitativen Beurteilung der Undichtigkeitsstelle wird der Durchflußmesser 4 verwendet, dessen Meßwerte ebenfalls von der Datenerfassungseinrichtung 20 verarbeitet und weitergeleitet werden.

## Patentansprüche

1. Vorrichtung zur Feststellung von Undichtigkeiten an Bauteilen (8), mit einer Einrichtung (2) zum Durchleiten von Gas durch das zu untersuchende Bauteil (8), einer Einrichtung (10) zur Bestrahlung des zu untersuchenden Bauteils (8) mit Infrarot - Strahlung, einer Kamera (14) mit einer im wesentlichen auf die spektrale Absorption des Gases abgestimmten, schmalbandigen Filtercharakteristik und einer an die Kamera (14) angeschlossenen Einrichtung (16, 18) zur Verarbeitung und Anzeige des aufgenommenen Bildes von dem zu untersuchenden Bauteil (8),
dadurch gekennzeichnet, daß es sich beim Gas um CO₂ handelt.

2. Vorrichtung nach Anspruch 1,
dadurch gekennzeichnet, daß die Gasdurchleitungseinrichtung (2) ein Durchflußmeßgerät (4) aufweist.

3. Vorrichtung nach Anspruch 1 oder 2,
dadurch gekennzeichnet, daß die Gasdurchleitungseinrichtung (2) das CO₂ unter Druck durch das zu untersuchende Bauteil (8) leitet.

4. Vorrichtung nach mindestens einem der Ansprüche 1 bis 3,
dadurch gekennzeichnet, daß das zu untersuchende Bauteil (8) und die Kamera (14) relativ zueinander bewegbar sind.

## Claims

1. Apparatus for detecting leaks in components (8), having a device (2) for passing gas through the component (8) to be inspected, a device (10) for irradiating the component (8) to be inspected with infrared radiation, a camera (14) having a narrowband filter characteristic substantially matched to the spectral absorption of the gas, and a device (16, 18) connected to the camera (14) and intended for processing and displaying the picked-up image of the component (8) to be inspected, characterized in that the gas is CO₂.

2. Apparatus according to Claim 1, characterized in that the gas pass-through device (2) includes a flowmeter (4).

3. Apparatus according to Claim 1 or 2, characterized in that the gas pass-through device (2) passes the CO₂ under pressure through the component (8) to be inspected.

4. Apparatus according to at least one of Claims 1 to 3, characterized in that the component (8) to be inspected and the camera (14) are movable relative to one another.

## Revendications

1. Dispositif de détection des fuites dans des éléments de construction (8), comprenant une installation (2) destinée à faire circuler un gaz à travers l'élément de construction (8) à examiner, une installation (10) destinée à projeter des rayons infrarouges sur l'élément de construction (8) à examiner, une caméra (14) présentant une caractéristique de filtrage à bande étroite, définie sensiblement en fonction de l'absorption spectrale du gaz, et une installation (16, 18) raccordée à la caméra (14), destinée à traiter et à afficher l'image enregistrée de l'élément de construction (8) à examiner,
caractérisé en ce que le gaz utilisé est du CO₂.

2. Dispositif selon la revendication 1, caractérisé en ce que le dispositif d'acheminement du gaz (2) comporte un débitmètre (4).

3. Dispositif selon la revendication 1 ou 2, caractérisé en ce que le dispositif d'acheminement du gaz (2) fait circuler le CO₂ sous pression à travers l'élément de construction (8) à examiner.

4. Dispositif selon au moins l'une quelconque des revendications 1 à 3, caractérisé en ce que l'élément de construction (8) à examiner et la caméra (14) peuvent être déplacés l'un par rapport à l'autre.
